# EUROPÄISCHE PATENTSCHRIFT

(11) **EP 0 833 752 B1**
(45) Veröffentlichungstag und Bekanntmachung des Hinweises auf die Patenterteilung: **25.11.1998**
(21) Anmeldenummer: 96921969.0
(22) Anmeldetag: 11.06.1996
(51) Int. Cl.: B41M 5/00, D21H 19/58

(54) **VERWENDUNG VON PAPIERSTREICHMASSEN MIT HOHEM BUTADIENGEHALT IM OFFSETDRUCK**
USE OF PAPER-COATING MATERIALS WITH HIGH BUTADIENE CONTENT IN OFFSET PRINTING
UTILISATION DE MATIERES A ENDUIRE LE PAPIER A TENEUR ELEVEE EN BUTADIENE EN IMPRESSION OFFSET

(30) Priorität: 21.06.1995 DE 19522399
(43) Veröffentlichungstag der Anmeldung: 08.04.1998
(73) Patentinhaber: BASF AKTIENGESELLSCHAFT, 67056 Ludwigshafen (DE)
(72) Erfinder: LEUBE, Hartmann, F., D-67061 Ludwigshafen (DE); LAWRENZ, Dirk, D-67133 Maxdorf (DE); SCHWARZENBACH, Elmar, D-67354 Römerberg (DE)
(86) Internationale Anmeldenummer: EP9602526
(87) Internationale Veröffentlichungsnummer: WO9700776

(56) Entgegenhaltungen:
- DE-A-19 512 999
- US-A- 2 685 571
- US-A- 3 047 427
- US-A- 4 950 711

## Beschreibung

Die Erfindung betrifft ein Verfahren zum Bedrucken von Papieren durch Offset-Druck.

Beim Offsetdruck handelt es sich um ein Flachdruckverfahren, bei dem die Druckform an den druckenden Stellen farbaufnahmefähig und hydrophob und an den nicht druckenden Stellen hydrophil ist. Infolge des ständigen Feuchtens der Druckform mit Wasser bleiben die nicht druckenden Stellen farbabstoßend.

Beim Offsetdruck gelangt im Gegensatz zu anderen Druckverfahren ständig Wasser auf das zu bedruckende Papier.

Die zu bedruckenden Papiere sind im allgemeinen mit einer Papierstreichmasse beschichtet.

Aufgrund der Besonderheiten des Offsetdruckverfahrens stellen sich auch besondere Anforderungen an das zu bedruckende Papier bzw. die Papierstreichmasse.

Aufgrund der ständigen Zufuhr von Wasser ist es erforderlich, daß Wasser durch die Papierstreichmasse aufgenommen und so aus dem Druckbereich ständig entfernt wird.

Beim Offsetdruck auf gestrichenen, d.h. mit Papierstreichmassen beschichteten Papieren tritt häufig ein für dieses Druckverfahren spezifisches Problem der Druckungleichmäßigkeit auf, welches in Fachkreisen als "Mottling" bezeichnet wird. Es gehört bis heute zu den ungelösten Problemen auf diesem Gebiet und beschäftigt in gleicher Weise Papierhersteller und Drucker. Bei diesem Phänomen handelt es sich um einen Effekt, der speziell beim Mehrfarbenoffsetdruck in den sogenannten Halbtönen vorkommt und als eine Art Wolkigkeit im Farbeindruck erscheint. Die Ungleichmäßigkeit in der Druckwiedergabe kommt ganz offensichtlich dadurch zustande, daß auf dem Papier die Druckfarbe an manchen Stellen besser, an anderen Stellen weniger gut angenommen wird.

Die Ursachen dieser ungleichmäßigen Farbannahme im Offsetdruckverfahren sind bis heute nicht eindeutig geklärt.

Bei Verringerung des Bindemittelanteils in den Papierstreichmassen erhält man zwar deutlich porösere Beschichtungen, die den vorgenannten Nachteil in geringerem Umfang aufweisen, jedoch sind dann die Pigmente in den Papierstreichmassen ungenügend gebunden. Beim Druckvorgang kommt es zum Ausbrechen aus den Beschichtungen unter der Einwirkung der hochviskosen, klebrigen Druckfarben. Dieses Phänomen wird als Rupfen oder genauer als Strichrupfen bezeichnet.

Aus EP-A-408 099 waren Bindemittel mit einem Butadiengehalt von 0 bis 100 Gew.-% bekannt. Bindemittel mit einem Butadiengehalt von ca. 36 Gew.-% wurden gemäß den Beispielen in Papierstreichmassen verwendet.

Aus Styrene Butadiene Latex Design and its effect in Paper Applications, R. Groves (Tagungsband Paper Week, 13-15.03.1984 in Bristol) ist bekannt, daß der Butadiengehalt in Bindemitteln für Papierstreichmassen üblicherweise 30 bis 45 Gew.-% beträgt.

Aufgabe der vorliegenden Erfindung war es, den obigen, beim Offset-Druck auftretenden Mängeln abzuhelfen.

Demgemäß wurde ein Verfahren zum Bedrucken von Papieren durch Offset-Druck, dadurch gekennzeichnet, daß die Papiere mit einer Papierstreichmasse beschichtet sind, welche ein Bindemittel mit einem Butadiengehalt von mindestens 65 Gew.-%, bezogen auf das Bindemittel, enthalten, gefunden.

Die weiteren Ausführungen betreffen bevorzugte Ausführungsformen des erfindungsgemäßen Verfahrens.

Die Papierstreichmassen enthalten neben Pigmenten als wesentlichen Bestandteil ein Bindemittel. Bei dem Bindemittel handelt es sich um ein ionisch oder vorzugsweise radikalisch polymerisiertes Polymer mit einem Butadiengehalt von mindestens 65 Gew.-%, vorzugsweise mindestens 74 Gew.-%.

Das Polymer kann sich insbesondere aus folgenden Monomeren zusammensetzen:
- 65 - 100 Gew.-%: Butadien
- 0 - 35 Gew.-%: C₁-C₁₀ Alkyl(methacrylate oder Vinylaromaten mit bis zu 20 C-Atomen (kurz Hauptmonomere genannt),
- 0 - 15 Gew.-%: ethylenisch ungesättigte Säuren, Säureanhydride oder Amide (kurz Hilfsmonomere genannt) und
- 0 - 30 Gew.-%: weitere Monomere.

Bevorzugt besteht das Polymer aus
- 65 - 99,5 Gew.-%: Butadien
- 0 - 34,5 Gew.-%: Hauptmonomere
- 0,5 - 15 Gew.-%: Hilfsmonomere und
- 0 - 30 Gew.-%: weitere Monomere.

Besonders bevorzugt besteht das Polymere aus
- 74 - 95 Gew.-%: Butadien
- 0 - 25 Gew.-%: Hauptmonomere
- 1 - 8 Gew.-%: Hilfsmonomere und
- 0 - 5 Gew.-%: weitere Monomere.

Ganz besonders bevorzugt besteht das Polymer aus
- 79 - 90 Gew.-%: Butadien
- 9 - 20 Gew.-%: Hauptmonomere
- 1 - 8 Gew.-%: Hilfsmonomere und
- 0 - 5 Gew.-%: weitere Monomere.

Als Hauptmonomere genannt seien z.B. Methyl(meth)acrylat, Ethyl(meth)acrylat, Propyl(meth)acrylat, Butyl(meth)acrylat und 2-Ethylhexyl(meth)acrylat sowie α-Methylstyrol und Styrol.

Besonders bevorzugt sind Styrol und n-Butylacrylat.

Als Hilfsmonomere kommen z.B. ungesättigte Carbonsäuren und/oder deren Amide und/oder Anhydride, wie beispielsweise Acrylsäure, Acrylamid, Methacrylsäure, Methacrylamid oder Itaconsäure, Maleinsäure, Fumarsäure, Vinylsulfonsäure, Vinylphosphonsäuren oder Acrylamidopropansulfonsäure und deren wasserlösliche Salze in Betracht.

Weitere Monomere sind z.B. Acrylnitril, Methacrylnitril, Vinylester von Carbonsäuren mit bis zu 20 C-Atomen, insbesondere Vinylacetat und Vinylpropionat, Vinylstearat und Vinyllaurat, radikalisch polymerisierbare Olefine z.B. Ethylen und Vinyl- oder Vinylidenhalogene wie Vinylchlorid oder Vinylidenchlorid.

Die Glasübergangstemperatur (Tg) der Polymeren beträgt vorzugsweise -80 bis +25, besonders bevorzugt bis -80 bis 0 und ganz besonders bevorzugt -70 bis -6°C. Die Tg kann nach Fox, Bull. Am. Phys. Soc. (Ser II) 1, 123 (1956) aus den TG der Monomeren berechnet werden.

Vorzugsweise wird das Polymer durch Emulsionspolymerisation hergestellt. Man erhält dabei eine wäßrige Dispersion von dispergierten Polyteilchen. Die Teilchengröße kann durch einfache Maßnahmen, wie Variation der Emulgatormenge oder der Rührerleistung in der gewünschten Größe eingestellt werden. Insbesondere kann zur besseren Einstellung der Teilchengröße eine Polymersaat, d.h. eine Polymerdispersion, in der die dispergieren Polymerteilchen eine Teilchengröße z.B. von 20 bis 50 nm haben, vorgelegt werden.

Die schließlich erhaltenen Dispersionen weisen in der Regel zahlenmittlere Teilchengrößen im Bereich von 10-1000 nm auf, insbesondere 20-500 nm, besonders bevorzugt 50 bis 200 nm, ganz besonders bevorzugt 100 bis 160 nm. Es können auch bimodale und multimodale Teilchengrößenverteilungen von Vorteil sein.

Bei der Polymerisation können übliche radikalische Polymerisationsinitiatoren verwendet werden.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate, Dibenzoylperoxid, γ-Butylperpivalat, t-Butylper-2-ethylhexanoat, 2,5-Dimethyl-2,5-di(t-butylperoxy)hexan, Cumolhydroperoxid, als auch um Azoverbindungen wie beispielsweise Azobisisobutyronitril, 2,2'-Azobis(2-amidinopropan)dihydrochlorid, handeln.

Geeignet sind auch kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure. Ferner eignen sich kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetabisulfit und anstelle von Wasserstoffperoxid tert.-Butylhydroperoxid oder Alkalimetallperoxodisulfate und/oder Ammoniumperoxodisulfate angewendet werden. In der Regel beträgt die Menge der eingesetzten radikalischen Initiatorsysteme, bezogen auf die Gesamtmenge der zu polymerisierenden Monomeren 0,1 bis 3 Gew.-%. Besonders bevorzugt werden Ammonium- und/oder Alkalimetallperoxodisulfate für sich oder als Bestandteil kombinierter Systeme als Initiatoren eingesetzt. Besonders bevorzugt wird Natriumperoxodisulfat verwendet.

Die Art und Weise, in der das radikalische Initiatorsystem im Verlauf der erfindungsgemäßen radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Im Falle der Emulsionspolymerisation können üblicherweise bekannte ionische und/oder nichtionische Emulgatoren und/oder Schutzkolloide bzw. Stabilisatoren verwendet werden.

Als derartige grenzflächenaktive Substanzen kommen prinzipiell die als Dispergiermittel üblicherweise eingesetzten Schutzkolloide und Emulgatoren in Betracht. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als begleitende Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren relative Molekulargewichte im Unterschied zu den Schutzkolloiden üblicherweise unter 2000 liegen. Selbstverständliche müssen im Falle der Verwendung von Gemischen grenzflächeaktiver Substanzen die Einzelkomponenten miteinander vertraglich sein, was im Zweifelsfall an Hand weniger Vorversuche überprüft werden kann. Vorzugsweise werden anionische und nichtionische Emulgatoren als begleitende grenzflächenaktive Substanzen verwendet. Gebräuchliche begleitende Emulgatoren sind z.B. ethoxylierte Fettalkohole (EO-Grad: 3 bis 50, Alkylrest; C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄ bis C₉), von Alkylsulfonsäuren (Alkylrest: C₁₂- bis C₁₈) und von Alkylarylsulfonsäuren (Alkylrest: C₉- bis C₁₈).

Weitere geeignete Dispergiermittel sind Verbindungen der allgemeinen Formel II 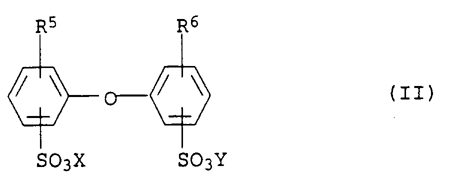 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Weitere geeignete Emulgatoren finden sich in Houben-Weyl, Methoden der organischen Chemie, Band XIV/1, Makromolekulare Stoffe, Georg Thieme Verlag, Stuttgart, 1961, Seiten 192 bis 208.

Die Dispersionen können auch unter Verwendung eines Schutzkolloids zusätzlich zu vorhandenem Emulgator oder unter Verzicht auf Emulgator, hergestellt werden, wobei die Menge des Schutzkolloids bis zu 100 Gew.-%, bevorzugt 0,5 bis 30 Gew.-%, bezogen auf die Menge der eingesetzten Monomere betragen kann.

Verfahrenstechnisch kann dieses Schutzkolloid vollständig oder zum Teil, zeitgleich oder zeitversetzt, mit den Monomeren gemeinsam oder getrennt, zugegeben werden; dabei kann es von Vorteil sein, bis zu 30 Gew.-%, vorzugsweise bis zu 10 Gew.-%, bezogen auf Monomere, Schutzkolloid in wäßriger Lösung vorzulegen.

Als natürliche Schutzkolloide seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Geeignete synthetische Schutzkolloide schließen Polyacrylsäure und deren Salze, Polyacrylamide, wasserlösliche Acrylsäurecopolymere, wasserlösliche Acrylamidcopolymere, Polyvinylpyrrolidone, Polyvinylalkohole und teilverseifte Polyvinylalkohole ein.

Hierbei kann es von Vorteil sein, wenn ein Teil des Schutzkolloids auf das Polymer aufgepfropft wird.

Die Emulsionspolymerisation erfolgt in der Regel bei 30 bis 95, vorzugsweise 75 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Selbstverständlich kann die erfindungsgemäße radikalische wäßrige Emulsionspolymerisation auch unter erhöhtem oder reduziertem Druck erfolgen.

Bei der Emulsionspolymerisation können auch molekulargewichtsregelnde Substanzen, kurz Regler genannt, wie beispielsweise tert.-Dodecylmercaptan, Tetrachlorkohlenstoff, Tetrabromkohlenstoff, Trichlorbrommethan, Butylmercaptan, Allylalkohol, Poly-THF-bis-thiol, Mercaptoethanol, Acetylaceton, Thioglykolsäure oder Thioglykolsäureester eingesetzt werden. Vorzugsweise werden derartige Substanzen im Gemisch mit den zu polymerisierenden Monomeren dem Reaktionsgemisch zugegeben. Der Anteil der molekulargewichtsregelnden Substanzen beträgt vorzugsweise 0 bis 2, besonders bevorzugt 0-1 Gew.-%, ganz besonders bevorzugt 0-0,5 Gew.-%, bezogen auf das Polymer.

Die wäßrigen Polymerdispersionen des Polymeren werden in der Regel mit Feststoffgehalten von 15 bis 75 Gew.-%, bevorzugt von 40 bis 60 Gew.-% hergestellt.

Die Dispersion können übliche Hilfsstoffe wie Ätzkali, Ammoniak oder Ethanolamin als Neutralisationsmittel, Siliconverbindungen als Entschäumer, Biozide sowie Siliconöle oder Wachse zur Absenkung der Klebrigkeit enthalten.

Die Papierstreichmassen enthalten das Polymere als Bindemittel, vorzugsweise in Mengen von 1 bis 50, insbesondere 5 bis 20 Gew.-%, bezogen auf den Pigmentgehalt der Papierstreichmassen (Angabe bezieht sich auf Polymer als solche nicht auf die Dispersion).

Üblicherweise stellen Pigmente die Hauptkomponente der Papierstreichmassen dar. Häufig verwendete Pigmente sind beispielsweise Bariumsulfat, Calciumcarbonat, Calciumsulfoaluminat, Kaolin, Talkum, Titandioxid, Zinkoxid, Kreide oder Streichclay.

Weiterhin können die Papierstreichmassen übliche Dispergiermittel enthalten. Geeignete Dispergiermittel sind Polyanionen, beispielsweise von Polyphosphorsäuren oder von Polyacrylsäuren (Polysalze), welche üblicherweise in Mengen von 0,1 bis 3 Gew.-%, bezogen auf die Pigmentmenge, enthalten sind.

Außerdem können die Papierstreichmassen sogenannte "Co-Binder" enthalten. Als natürliche Cobinder seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Es können aber auch übliche synthetische Cobinder, z.B. auf Vinylacetat- oder Acrylatbasis, verwendet werden.

Diese können in Mengen von 0,1 bis 10 Gew.-%, bezogen auf die Pigmentmenge enthalten sein.

Zur Herstellung der Papierstreichmasse werden die Bestandteile in bekannter Weise gemischt, wobei das Polymere im allgemeinen in Form der wäßrigen Dispersion verwendet wird.

Der Gehalt an Wasser in der Papierstreichmasse wird üblicherweise auf 40 bis 75 Gew.-%, bezogen auf die Papierstreichmasse, eingestellt.

Die Papierstreichmasse kann nach üblichen Verfahren auf die zu beschichtenden Papiere aufgebracht werden (vgl. Ullmann's Encyclopädie der Technischen Chemie, 4. Auflage, Bd. 17, S. 603 ff).

Als zu beschichtende Papiere kommen Papiere unterschiedlichster Dicken, auch Karton u.ä. in Betracht.

Die Papiere sind vorzugsweise mit 2 g (m²) bis 50 g (m²) der Papierstreichmasse (trocken) beschichtet.

Die beschichteten Papiere werden im bekannten Offset-Druckverfahren bedruckt. Die bedruckten Papiere zeigen allenfalls nur ein geringes "Mottling". Das Druckbild ist gleichmäßig.

### Beispiele

### Herstellung von Dispersion auf Basis Styrol-Butadien

### Dispersion 1 (D1)

### Vorlage:

- 17,0 kg: vollentionisiertes Wasser
- 2,14 kg: Polystyrolsaatdispersion (Festgehalt 35 %, Teilchengröße: 38 nm, stabilisiert mit 10 % Arylsulfonat (Dodecylbenzolsulfonsäurenatriumsalz)
- 5 %: von Zulauf 1
- 25 %: von Zulauf 2

### Zulauf 1:

- 18,6 kg: vollentionisiertes Wasser
- 42,5 kg: Butadien
- 5,0 kg: Styrol
- 1,75 kg: Acrylsäure
- 1,5 kg: Acrylamid, 50 %ig in Wasser
- 0,3 kg: t-Dodecylmercaptan
- 2,50 kg: Natriumlaurylsulfat, 15 %ig in Wasser

### Zulauf 2:

- 0,4 kg: Natriumpersulfat
- 7,0 kg: vollentionisiertes Wasser

Die Vorlage wurde auf 85°C erhitzt und 15 min anpolymerisiert. Anschließend wurde der restliche Zulauf 1 während 7 Stunden und gleichzeitig mit Zulauf 1 beginnend Zulauf 2 während 7,5 Stunden zugegeben. Anschließend wurde 2 Stunden bei 85°C nachpolymerisiert. Man erhielt eine Dispersion mit Teilchengröße (Malvern Autosizer) 146 nm und 50 % Feststoffgehalt. Die Glastemperatur betrug -65°C.

### Dispersion 2 (D2)

### Vorlage:

- 17,0 kg: vollentionisiertes Wasser
- 2,14 kg: Polystyrolsaatdispersion (Festgehalt 35 %, Teilchengröße: 38 nm, stabilisiert mit 10 % Arylsulfonat (Dodecylbenzolsulfonsäurenatriumsalz)
- 5 %: von Zulauf 1
- 25 %: von Zulauf 2

### Zulauf 1:

- 18,6 kg: vollentionisiertes Wasser
- 35,0 kg: Butadien
- 12,5 kg: Styrol
- 1,75 kg: Acrylsäure
- 1,5 kg: Acrylamid, 50 %ig in Wasser
- 0,3 kg: t-Dodecylmercaptan
- 2,50 kg: Natriumlaurylsulfat, 15 %ig in Wasser

### Zulauf 2:

- 0,4 kg: Natriumpersulfat
- 7,0 kg: vollentionisiertes Wasser

Die Vorlage wurde auf 85°C erhitzt und 15 min anpolymerisiert. Anschließend wurde der restliche Zulauf 1 während 7 Stunden und gleichzeitig mit Zulauf 1 beginnend Zulauf 2 während 7,5 Stunden zugegeben. Anschließend wurde 2 Stunden bei 85°C nachpolymerisiert. Man erhielt eine Dispersion mit Teilchengröße (Malvern Autosizer) 153 nm und 50 % Feststoffgehalt. Die Glastemperatur betrug -49°C.

### Dispersion 3 (D3)

### Vorlage:

- 17,0 kg: vollentionisiertes Wasser
- 2,14 kg: Polystyrolsaatdispersion (Festgehalt 35 %, Teilchengröße: 38 nm, stabilisiert mit 10 % Arylsulfonat (Dodecylbenzolsulfonsäurenatriumsalz)
- 5 %: von Zulauf 1
- 25 %: von Zulauf 2

### Zulauf 1:

- 18,6 kg: vollentionisiertes Wasser
- 42,5 kg: Butadien
- 5,0 kg: n-Butylacrylat
- 1,75 kg: Acrylsäure
- 1,5 kg: Acrylamid, 50 %ig in Wasser
- 0,3 kg: t-Dodecylmercaptan
- 2,50 kg: Natriumlaurylsulfat, 15 %ig in Wasser

### Zulauf 2:

- 0,4 kg: Natriumpersulfat
- 7,0 kg: vollentionisiertes Wasser

Die Vorlage wurde auf 85°C erhitzt und 15 min anpolymerisiert. Anschließend wurde der restliche Zulauf 1 während 7 Stunden und gleichzeitig mit Zulauf 1 beginnend Zulauf 2 während 7,5 Stunden zugegeben. Anschließend wurde 2 Stunden bei 85°C nachpolymerisiert. Man erhielt eine Dispersion mit Teilchengröße (Malvern Autosizer) 147 nm und 50 % Feststoffgehalt. Die Glastemperatur betrug -77°C.

### Dispersion 4 (D4, zum Vergleich)

### Vorlage:

- 17,0 kg: vollentionisiertes Wasser
- 2,14 kg: Polystyrolsaatdispersion (Festgehalt 35 %, Teilchengröße: 38 nm, stabilisiert mit 10 % Arylsulfonat (Dodecylbenzolsulfonsäurenatriumsalz)
- 5 %: von Zulauf 1
- 25 %: von Zulauf 2

### Zulauf 1:

- 18,6 kg: vollentionisiertes Wasser
- 20,0 kg: Butadien
- 27,5 kg: Styrol
- 1,75 kg: Acrylsäure
- 1,5 kg: Acrylamid, 50 %ig in Wasser
- 0,3 kg: t-Dodecylmercaptan
- 2,50 kg: Natriumlaurylsulfat, 15 %ig in Wasser

### Zulauf 2:

- 0,4 kg: Natriumpersulfat
- 7,0 kg: vollentionisiertes Wasser

Die Vorlage wurde auf 85°C erhitzt und 15 min anpolymerisiert. Anschließend wurde der restliche Zulauf 1 während 5 Stunden und gleichzeitig mit Zulauf 1 beginnend Zulauf 2 während 5,5 Stunden zugegeben. Anschließend wurde 2 Stunden bei 85°C nachpolymerlsiert. Man erhielt eine Dispersion mit Teilchengröße (Malvern Autosizer) 143 nm und 50 % Feststoffgehalt. Die Glastemperatur betrug 11°C.

### Dispersion 5 (D5, zum Vergleich)

### Vorlage:

- 17,0 kg: vollentionisiertes Wasser
- 2,14 kg: Polystyrolsaatdispersion (Festgehalt 35 %, Teilchengröße: 38 nm, stabilisiert mit 10 % Arylsulfonat (Dodecylbenzolsulfonsäurenatriumsalz)
- 5 %: von Zulauf 1
- 25 %: von Zulauf 2

### Zulauf 1:

- 18,6 kg: vollentionisiertes Wasser
- 20,0 kg: Butadien
- 27,5 kg: Styrol
- 1,75 kg: Acrylsäure
- 1,5 kg: Acrylamid, 50 %ig in Wasser
- 0,6 kg: t-Dodecylmercaptan
- 2,50 kg: Natriumlaurylsulfat` 15 %ig in Wasser

### Zulauf 2:

- 0,4 kg: Natriumpersulfat
- 7,0 kg: vollentionisiertes Wasser

Die Vorlage wurde auf 85°C erhitzt und 15 min anpolymerisiert. Anschließend wurde der restliche Zulauf 1 während 5 Stunden und gleichzeitig mit Zulauf 1 beginnend Zulauf 2 während 5,5 Stunden zugegeben. Anschließend wurde 2 Stunden bei 85°C nachpolymerisiert. Man erhielt eine Dispersion mit Teilchengröße (Malvern Autosizer) 143 nm und 50 % Feststoffgehalt. Die Glastemperatur betrug 6°C.

Die Zusammensetzung der Polymeren in Gew.-% ist in der nachfolgenden Tabelle 1 aufgeführt.

**Tabelle 1**

| Polymer aus | Butadien | Styrol | n-Butylacrylat | Acrylsäure | Acrylamid |
|---|---|---|---|---|---|
| D1 | 85 | 10 | 0 | 3,5 | 1,5 |
| D2 | 70 | 25 | 0 | 3,5 | 1,5 |
| D3 | 85 | 0 | 10 | 3,5 | 1,5 |
| D4 | 40 | 55 | 0 | 3,5 | 1,5 |
| D5 | 40 | 55 | 0 | 3,5 | 1,5 |

Die Dispersionen wurden als Bindemittel in zwei verschiedenen Papierstreichmassen der folgenden Zusammensetzungen verwendet (Teile sind Gewichtsteile).
A)
   80 Tle. feinteilige Kreide
   20 Tle. feinteiliger Clay
   0,7 Tle. Carboxymethylcellulose
   0,5 Tle. eines Natriumsalzes einer Polyacrylsäure mit einem Molekulargewicht von 4000 (Polysalz von BASF)
   13 Tle. Bindemitteldispersion (D1-D5))
   Feststoffgehalt: 70 %
   pH-Wert: 8,5 bis 9 (eingestellt mit NaOH)
B)
   80 Tle. feinteilige Clay
   20 Tle. feinteiliger Kreide
   2,0 Tle. Streichereistärke
   0,2 Tle. eines Natriumsalzes einer Polyacrylsäure mit einem Molekulargewicht von 4000 (Polysalz von BASF)
   12 Tle. Bindemitteldispersion (D1-D5)
   Feststoffgehalt: 64 %
   pH-Wert: 8,5 (eingestellt mit NaOH)

Diese Papierstreichmassen wurden auf die folgenden Weisen weiterverarbeitet:

### Beschichtung I

Als Rohpapier wurde ein holzfreies Streichrohpapier mit einem Flächengewicht von 70 g/m² verwendet. Der Auftrag der Streichmasse erfolgte beidseitig mit jeweils 12 g/m² auf einer Technikumsstreichmaschine (Auftragsverfahren: Walze, Dosierverfahren: Blade) mit einer Geschwindigkeit von 100 m/min. Die Papierbahn wurde mittels einer IR-Trockeneinheit und Lufttrocknung auf eine Papierfeuchte von 5,0 % eingestellt.

Die Papierbahn wurde durch einmaligen Durchlauf durch einen Superkalander geglättet. Dabei betrug der Liniendruck 250 kN/m, die Bahngeschwindigkeit 300 m/min und die Temperatur 80°C.

### Beschichtung II

Ein weiterer Streichversuch wurde auf einem Rohkarton mit einem Flächengewicht von 250 g/m² vorgenommen. Der Auftrag der Streichmasse erfolgte einseitig mit 12 g/m² auf einer Technikumsstreichmaschine (Auftragsverfahren: Walze, Dosierverfahren: Blade) mit einer Geschwindigkeit von 600 m/min. Die Kartonbahn wurde mittels einer IR-Trockeneinheit und Lufttrocknung auf eine Feuchte von 6,0 % eingestellt.

| Versuche und Vergleichsversuche V | Dispersion | Papierstreichmasse | Beschichtung |
|---|---|---|---|
| 1 | D1 | A | I |
| V2 | D5 | A | I |
| 3 | D2 | A | I |
| V4 | D4 | A | I |
| 5 | D3 | A | I |
| 6 | D1 | B | I |
| V7 | D5 | B | I |
| 8 | D2 | B | I |
| V9 | D4 | B | I |
| 10 | D3 | B | I |
| 11 | D1 | A | II |
| V12 | D5 | A | II |
| 13 | D2 | A | II |
| V14 | D4 | A | II |
| 15 | D3 | A | II |

Anwendungstechnische Prüfungen
A) Farbwegschlag
   Mit Farbwegschlag wird die Annahme und Trocknung der Druckfarbe auf dem zu bedruckenden Papier bezeichnet. Gewünscht ist ein schneller Farbwegschlag, um so eine möglichst hohe Druckgeschwindigkeit zu erreichen.
   Die Prüfung erfolgte mit einem Prüfbauprobedruckgerät bei einer Druckgeschwindigkeit von 1 m/s mit einem Liniendruck von 200 N/cm.
   Die bedruckten Teststreifen wurden 15 s nach dem Drucken mit sogenannten Konterstreifen abgedeckt. Ausgewertet wird die Anfärbung des Konterstreifens, d.h. der Farbübertrag:
   Viel Farbübertrag = langsames Wegschlagen, wenig Farbübertrag = schnelles Wegschlagen.
B)
   a) Bestimmung der Trockenrupffestigkeit mit dem IGT-Probedruckgerät
      Die Teststreifen wurden mit zunehmender Geschwindigkeit bedruckt. Die maximale Druckgeschwindigkeit betrug 200 cm/s. Der Farbauftrag erfolgte bei einem Liniendruck von 35 kp/cm.
      Bei der sogenannten Punktauswertung wird, vom ersten Rupfpunkt (also dem ersten Ausrißpunkt aus der Papierstreichmasse) ausgehend, der zehnte Rupfpunkt ausgezählt.
      Die Trockenrupffestigkeit wird in cm/s, also der beim zehnten Rupfpunkt anliegenden Druckgeschwindigkeit angegeben.
   b) Rupffestigkeit bei Mehrfachbedruckung
      Das Bedrucken der Teststreifen wurde mit konstanter Geschwindigkeit (1 m/s) durchgeführt und erfolgte bei einem Liniendruck von 200 N/cm.
      Der Druckvorgang wird nach 30 s wiederholt. Als Rupffestigkeit wird die Anzahl von Durchgängen bis Rupfen auftritt angegeben.
C) Verklebungstest nach Mullen
   Diese Prüfung wurde nur bei den Kartonbeschichtungen II durchgeführt.
   Die aus dem Karton ausgeschnittenen Teststreifen (8 x 15 cm) wurden mit einem handelsüblichen Vinylacetatdispersion 20 mm überlappend verklebt und nach 60 min die Kraft in Kp zum Zerreißen der Klebenaht bestimmt.
   Zweck der Prüfung ist festzustellen, ob wäßrige Kleber den beschichteten Karton gut benetzen und feste Verklebungen erhältlich sind.
D) Bedruckbarkeit
   Zur Beurteilung der Bedruckbarkeit wurden die auf eine 4-Farben Offsetdruckmaschine (Heidelberg) gedruckten Bögen fünf Personen zur Begutachtung vorgelegt. Bewertet wurde ein gleichmäßiger Druckausfall sowohl in Voll- als auch in Halbtönen.
E) Randwinkel
   Die Randwinkel wurden mit der Methode des aufgesetzten Tropfens mit Wasser bestimmt. Die Messung erfolgte nach verschiedenen Zeiträumen und wurde auf den Zeitpunkt t=0 extrapoliert. Die Angabe erfolgt in Grad.
   Zweck der Prüfung ist die Bestimmung der Hydrophilie der Beschichtung. Kleine Werte bedeuten gute Benetzung und Aufnahme von Wasser.

**Tabelle**

| Ergebnisse der Prüfungen | | | | | | |
|---|---|---|---|---|---|---|
| Versuch | Wegschlagtest A | IGT-Test Ba | Offsettest Bb | Verklebung C | Bedruckbarkeit D | Randwinkel E |
| 1 | schnell | > 200 | > 6 | - | ausgezeichnet | 50 |
| V2 | langsam | > 200 | > 6 | - | mäßig | 76 |
| 3 | schnell | 195 | > 6 | - | gut | 52 |
| V4 | schnell | 80 | 3 | - | mäßig | 41 |
| 5 | schnell | > 200 | > 6 | - | gut | 55 |
| 6 | schnell | 130 | > 6 | - | ausgezeichnet | 34 |
| V7 | langsam | 125 | > 6 | - | gut | 63 |
| 8 | schnell | 123 | > 6 | - | gut | 43 |
| V9 | schnell | 50 | 3 | - | schlecht | 41 |
| 10 | schnell | 132 | > 6 | - | gut | 52 |
| 11 | schnell | > 200 | 5 | 123 | gut | 52 |
| V12 | langsam | 186 | 5 | 130 | mäßig | 72 |
| 13 | schnell | 194 | 4 | 115 | mäßig | 48 |
| V14 | schnell | 36 | 2 | 60 | schlecht | 43 |
| 15 | schnell | > 200 | 5 | 127 | gut | 54 |

Wie aus der Ergebnistabelle ersichtlich, kann die günstige Eigenschaftskombination gute Rupffestigkeit und schnelles Farbwegschlagen und gute Wasseraufnahme, d.h. hydrophile Beschichtung, von den üblichen, nicht erfindungsgemäßen Bindern nicht erreicht werden.

Die erfindungsgemäßen Streichfarben führen zu relativ offenen Beschichtungen, die eine gute Penetration des Wassers ermöglichen. Dadurch wird ein homogener Farbfilm auf dem Papier erzeugt. Das gute Farbwegschlagverhalten ist besonders bei Mehrfachbeschichtungen von Vorteil, da hier häufig sehr dichte Beschichtungen entstehen. Übliche Papierstreichmassen verlangsamen das Farbwegschlagen oft so weit, daß es zu Abliegen der Druckfarbe im Stapel kommt.

Insbesondere bei Karton ist der hydrophile Charakter der Oberfläche von besonderem Vorteil, da Kleber auf wäßriger Basis gut benetzen und zu schnellen, dauerhaften Verklebungen führen. Die beschichteten Papiere weisen eine hohe Rupffestigkeit auf, die ein problemloses Verdrucken im Offset ermöglicht.

## Patentansprüche

1. Verfahren zum Bedrucken von Papieren durch Offset-Druck, dadurch gekennzeichnet, daß die Papiere mit einer Papierstreichmasse beschichtet sind, welche ein Bindemittel mit einem Butadiengehalt von mindestens 65 Gew.-%, bezogen auf das Bindemittel, enthält.

2. Verfahren gemäß Anspruch 1, dadurch gekennzeichnet, daß die Papiere mit 2 g/m² bis 50 g/m² Papierstreichmasse beschichtet sind.

3. Verfahren gemäß Anspruch 1 oder 2, dadurch gekennzeichnet, daß der Gehalt des Bindemittels in der Papierstreichmasse 1 bis 50 Gew.-%, bezogen auf den Pigmentgehalt, beträgt.

4. Verfahren gemäß einem der Ansprüche 1 bis 3, dadurch gekennzeichnet, daß es sich bei dem Bindemittel um ein Copolymerisat aus
65 bis 98 Gew.-% Butadien,
2 bis 35 Gew.-% einer C₁-C₁₀-Alkyl(meth)acrylats oder eines Vinylaromaten mit bis zu 20 C-Atomen
0 bis 15 Gew.-% einer ethylenisch ungesättigten Säure, eines Säureanhydrids oder eines Amids und
0 bis 30 Gew.-% weiterer Monomere
handelt.

5. 5erfahren gemäß einem der Ansprüche 1 bis 4, dadurch gekennzeichnet, daß das Bindemittel durch Emulsionspolymerisation hergestellt wird und eine gewichtsmittlere Teilchengröße von 50 bis 200 nm hat.

6. Verfahren gemäß einem der Ansprüche 1 bis 5, dadurch gekennzeichnet, daß die Herstellung des Bindemittels durch Polymerisation der Monomeren in Gegenwart von 0 bis 1 Gew.-% Regler, bezogen auf das Bindemittel, erfolgt.

7. Mit einer Papierstreichmasse beschichtete Papiere, dadurch gekennzeichnet, daß die Papierstreichmasse ein Bindemittel mit einem Butadiengehalt von mindestens 65 Gew.-% enthält.

8. Verwendung von Papieren gemäß Anspruch 7 im Offset- Druck.

9. Im Offset-Druck-Verfahren bedruckte Papiere gemäß Anspruch 7.

## Claims

1. A process for printing on papers by offset printing, wherein the papers are coated with a paper coating slip which contains a binder having a butadiene content of at least 65% by weight, based on the binder.

2. A process as claimed in claim 1, wherein the papers are coated with from 2 g/m² to 50 g/m² of paper coating slip.

3. A process as claimed in claim 1 or 2, wherein the content of the binder in the paper coating slip is from 1 to 50% by weight, based on the pigment content.

4. A process as claimed in any of claims 1 to 3, wherein the binder is a copolymer of
from 65 to 98% by weight of butadiene,
from 2 to 35% by weight of a C₁-C₁₀₋alkyl (meth) acrylate or of a vinylaromatic of up to 20 carbon atoms,
from 0 to 15% by weight of an ethylenically unsaturated acid, of an acid anhydride or of an amide and
from 0 to 30% by weight of further monomers.

5. A process as claimed in claims 1 to 4, wherein the binder is prepared by emulsion polymerization and has a weight average particle size of 50 to 200 nm.

6. A process as claimed in claims 1 to 5, wherein the preparation of the binder by polymerization of the monomers is carried out in the presence of from 0 to 1% by weight based on the binder, of a regulator.

7. A paper coated with a paper coating slip, wherein the paper coating slip contains a binder having a butadiene content of at least 65% by weight.

8. The use of a paper as claimed in claim 7 in offset printing.

9. A paper as claimed in claim 7, printed on by the offset printing process.

## Revendications

1. Procédé d'impression de papiers par impression offset, caractérisé en ce que les papiers sont enduits avec une pâte de couchage contenant un liant ayant une teneur en butadiène d'au moins 65% en poids, par rapport au liant.

2. Procédé selon la revendication 1, caractérisé en ce que les papiers sont enduits avec 2g/m²-50 g/m² de pâte de couchage.

3. Procédé selon la revendication 1 ou 2, caractérisé en ce que la teneur du liant dans la pâte de couchage s'élève à 1-50% en poids, par rapport à la teneur en pigments.

4. Procédé selon l'une quelconque des revendications 1 à 3, caractérisé en ce que le liant est un copolymère formé à partir de
65-98% en poids de butadiène,
2-35% en poids d'un (méth)acrylate d'alkyle en C₁-C₁₀ ou d'un composé vinylaromatique ayant jusqu'à 20 atomes de carbone,
0-15% en poids d'un acide à insaturation éthylénique, d'un anhydride d'acide ou d'un amide et
0-30% en poids d'autres monomères.

5. Procédé selon l'une quelconque des revendications 1 à 4, caractérisé en ce que le liant est préparé par polymérisation en émulsion et présente une granulométrie moyenne en poids de 50-200 nm.

6. Procédé selon l'une quelconque des revendications 1 à 5, caractérisé en ce que la préparation du liant est effectuée par polymérisation des monomères en présence de 0-1% en poids, par rapport au liant, d'un régulateur.

7. Papier enduit d'une pâte de couchage, caractérisé en ce que la pâte de couchage contient un liant ayant une teneur en butadiène d'au moins 65% en poids.

8. Utilisation de papier selon la revendication 7 pour l'impression offset.

9. Papier selon la revendication 7 imprimé par un procédé d'impression offset.
